# EUROPEAN PATENT SPECIFICATION

(11) **EP 2 676 795 B1**
(45) Date of publication and mention of the grant of the patent: **05.09.2018**
(21) Application number: 13185022.4
(22) Date of filing: 17.07.2009
(51) Int. Cl.: B32B 37/24, B32B 33/00, B27N 3/00, E04F 15/10, E04F 15/02, B44C 5/04

(54) **Method for manufacturing a panel and panel manufactured by said method.**
Verfahren zur Herstellung einer Platte und nach diesem Verfahren hergestellte Platte.
Procédé de fabrication d'un panneau et panneau obtenu par ledit procédé.

(30) Priority: 17.06.2009 EP 09007916
(43) Date of publication of application: 25.12.2013
(62) Divisional of application: 13156132.6
(73) Proprietor: Välinge Innovation AB, 263 65 Viken (SE)
(72) Inventor:
(74) Representative: Westeman, Maria

(56) References cited:
- WO-A1-00/44576
- WO-A1-2004/050359
- WO-A1-2007/042258
- WO-A2-2005/066431
- WO-A2-2009/065769
- DE-A1-102004 050 278
- US-A- 3 308 013

## Description

The disclosure generally relates to the field of fiber-based panels with wear resistant surfaces. Such panels can be used e.g. as building or floor panels.

WO 2009 065 769 A2 discloses a panel of this kind. One issue with panels of this kind is the sensitivity to UV radiation. If a panel comprises a surface with e.g. wood fibers, the surface will change its color over time. In many cases the surface will become yellowish.

Therefore it is important to have panels with an improved light fastness.

The present invention relates to a method for manufacturing a panel as defined in the appended claims, and to a panel manufactured by said method. The panel comprises a surface layer on a substrate. The surface layer comprises a mixture of
a) cellulose fibers,
b) at least one binder and
c) wear resistant particles.

As will be described below, the substrate can be a homogenous substrate, such a board, or it can comprise more than one layer, like a core and / or balancing layer. The surface layer is on the side of the substrate which is in use turned towards the light and / or environmental influences.

Such panels can e.g. used as flooring panels, wall panels, ceiling panels, facade panels, furniture panels, automotive parts, wet room panels or kitchen cutting boards. The method for manufacturing panels described above comprises the following steps :
a) storing cellulose fibers, at least one binder and wear resistant particles in different tanks,
b) bringing the cellulose fibers, said at least one binder and the wear resistant particles onto a substrate,
c) applying pressure and temperature in a pressing station to cure said at least one binder for forming a surface layer on the substrate.

Embodiments for panels like these are described in connection with the drawing. In the drawings
- Fig. 1: shows part of a perspective view of a cross-section of a panel according to a first embodiment;
- Fig. 2: shows part of a perspective view of a cross-section of a panel according to a further embodiment
- Fig. 3: shows two panels connected using a locking system;

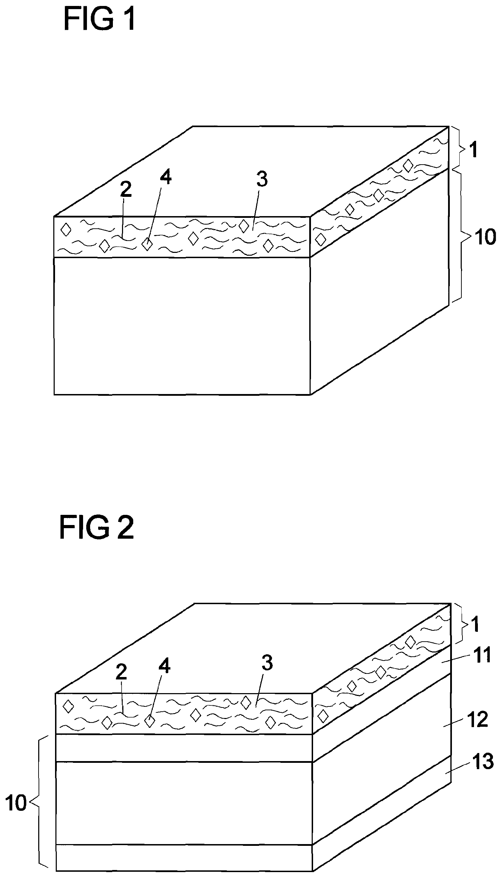

In Fig. 1 a perspective view of a cross-section of a panel which can e.g. be used as a flooring panel is shown. Flooring panels are subjected to light, e.g. through windows, so that the light fastness of flooring panels is one important factor.

The panel comprises two sections: A substrate 10 on which a surface layer 1 is positioned. The surface layer 1 is the one part which is especially important in respect to light fastness since it is the side of the panel which is exposed to light, when in use. As will be seen below, the surface layer 1 can comprise sublayers and does not have to be homogenous.

The substrate 10 can be one homogenous part, e.g. consisting of a board. In Fig. 2 a more complex structure of the substrate 10 is shown.

Within the surface layer 1 at least three components are present which in combination bring the desired functionality of the surface layer 1. The surface layer comprises cellulose fibers 2 which can be derived from e.g. wood, cotton or hemp. The cellulose fibers 2 act as reinforcement material. The length of typical cellulose fibers can be between 1 and 5 mm.

The cellulose fibers 2 have the feature of being light fast, especially light faster than wood fibers. Therefore a surface layer 1 comprising cellulose does not become discolored (e.g. yellow) under irradiation with UV light, such as it is normally present in sunlight.

In one embodiment the cellulose fibers 2 are at least partially bleached. The bleaching, e.g. which NaOH, reduces the concentration of components (e.g. lignin, hemicelluloses) which can give especially rise to discoloring.

One possible embodiment comprises at least partially bleached cellulose fibers 2 having a white grade measured according to Berger of more than 80.

But the panel described herein is not only bright but also resistant against discoloring. One embodiment is panel having a light fastness according to grey wool scale EN 20 105 of the surface layer 1 with a level higher than 2.

Furthermore the surface layer 1 comprises binder 3 and wear resistant particles 4. The binder 3 holds the different components of the surface layer 1 together.

Possible binders 3 are e.g. melamine resins, acrylic resins and / or polyurethane resins, i.e. mixtures of these resins are also suitable as binders 3. These binders 3 provide sufficient resilience against environmental impacts.

Suitable wear resistant particles 4 are aluminum oxides, silicon carbides, silicon oxides and / or micro glass bubbles. These particles are resilient and sufficiently color neutral.

If color is to be applied to the panel, this can be achieved by including suitable pigments into the surface layer 1.

The embodiments described so far comprised one substrate 10 without differentiated layers.

In Fig. 2 a substrate 10 with three layers 11, 12, 13 is shown. On the front side, i.e. the side exposed to light or other environmental effects, the surface layer 1 is positioned. The surface layer 1 can have the properties according to at least of one of the embodiments described above.

One layer in the substrate 10 is core 11 which is positioned underneath the surface layer 1. One purpose of the core 11 is to provide some resilience in case the surface layer 1 is structured e.g. by pressing with a tool (not shown) into the surface layer 1. The core 11 can comprise wood fibers, cellulose fibers, hemp fibers, cotton fibers and / or plastic fibers. Since the purpose of the core 11 is primarily not the stability of the overall panel, but the resilience, less costly components, like wood fibers can be used here in higher concentrations. Other possible components of the core 11 can be a binder (such as the resins mentioned above), bleached cellulose, unbleached cellulose, bleached ground wood, unbleached ground wood and / or pigments.

Structuring the surface layer 1 and the core 11 can result in a surfaces e.g. with a stone-like structure or a tile-like structure. Together with suitable pigments the panel can have the appearance of stone or tiles. Another possibility structure the surface layer 1 is an analogue or digital printing process, applying e.g. a decorative print.

In Fig. 2 a board 12 is positioned underneath the core 11. The board 12 primary purpose is to give stability to the panel. Suitable materials for boards can be e.g. particle boards, HDF boards, gypsum boards, WPC (wood plastic composite) or OSB boards. Naturally it is possible to combine more than one kind of board to obtain a multilayered board 12.

As shown in Fig. 2 it is possible to position a balancing paper 13 underneath the board 12.

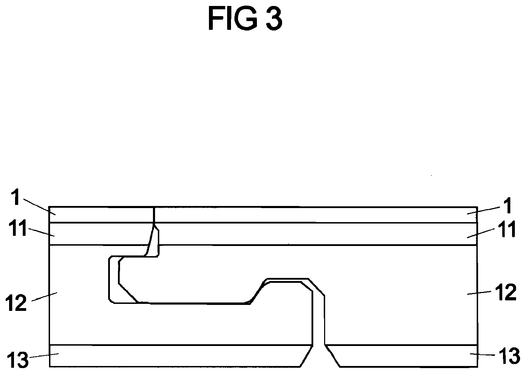

In Fig. 3 two panels with a surface layer 1 and a substrate 10 are shown which are connected through a locking system. The person skilled in the art will recognize that locking systems using other shapes are also possible.

The above described flooring panel is just one embodiment of the panels described herein. Other uses of such panels are wall panels, ceiling panels, facade panels, furniture panels, automotive parts, wet room panels or kitchen cutting boards. The thickness of the surface layer 1 can vary between 0,05 and 0,3 mm. The thickness of the core 11 can vary between 0.05 and 1 mm.

All these panels would benefit from the surface layer 1 using cellulose fibers, at least one binder and wear-resistant particles.

In the following an embodiment of a method for manufacturing panels is described.

The components of the surface layer 1, i.e. the cellulose fibers 2, the at least one binder 3 and the wear resistant particles 4, are applied to the surface of the substrate 10. After this step pressure and temperature are applied to the surface to cure the mixture and to fasten the surface layer 1 to the substrate 10.

Suitable process conditions are pressures between 3 and 8 MPa and temperatures in the range between 150 and 200 °C.

It is preferred that the surface of the substrate 10 is wetted by using a wetting station before applying the mixture to it. This is one means to produce firmer panels and prevent dusting. The different components of the surface layer 1 can be scattered onto the substrate 10 by the means of the scatter station.In one embodiment of the method, melamine resin powder is scattered onto the surface of the substrate with cellulose fibers 2 and aluminum oxides. The scattering station comprises different tanks so that the components to be scattered do not have to be stored in one tank. Further optionally pigments can be scattered onto substrate 10 together with the cellulose fibers and the resin.

In a subsequent heating station some sort of heating is applied to the layer. The heating station can e.g. comprise an infrared source and / or a microwave source.

In a prepress station pressure and elevated temperatures are applied to the surface layer. This leads to a prepreg with an increased density.

In a pressing station further pressure and elevated temperature is applied to fuse the surface layer and the substrate together. This leads to a curing of the components. Typical operating conditions are pressures in the range 3 to 8 MPa and 150 to 250 °C.

The stages described here are only described schematically. Each of the stages might comprise more than one apparatus.

Other aspects of the invention may be defined as:
Item 1. Panel comprising a surface layer (1) on a substrate (10),
   characterized in that
   the surface layer (1) comprises
   a) cellulose fibers (2),
   b) at least one binder (3) and
   c) wear resistant particles (4).
Item 2. Panel according to item 1, wherein the cellulose fibers (2), the at least one binder (3) and the wear resistant particles (4) are present in one mixture on the substrate (10).
Item 3. Panel according to item 1 or 2, wherein the cellulose fibers (2) are at least partially bleached.
Item 4. Panel according to at least one of the preceding items, wherein the at least partially bleached cellulose fibres (2) have a white grade measured according to Berhger of more than 80.
Item 5. Panel according to at least one of the preceding items, wherein the light fastness of the according to grey wool scale EN 20 105 of the surface layer (1) is higher than 2.
Item 6. Panel according to at least one of the preceding items, wherein the surface layer (1) comprises pigments.
Item 7. Panel according to at least one of the preceding items, wherein the binder (3) comprises melamine resin, acryl ate resin and / or polyurethane resin.
Item 8. Panel according to at least one of the preceding items, wherein the wear resistant particles (4) are at least one of the following: aluminum oxides, silicon carbides, silicon oxide, micro glass bubbles.
Item 9. Panel according to at least one of the preceding items, wherein the substrate (10) comprises a core (11) with at least one of the following: wood fibers, cellulose fibers, hemp fibers, cotton fibers, plastic fibers.
Item 10. Panel according to at least one of the preceding items, wherein the surface layer (1) and / or the core (11) comprises a structure, especially a tile-like structure or a stone-like structure.
Item 11. Panel according to at least one of the preceding items, wherein the board (12) is a particle board or a HDF board or a gypsum board or an OSB board.
Item 12. Method for manufacturing especially a panel according to item 1 to 11 comprising
   a) bringing cellulose fibers (2), at least one binder (2) and wear resistant particles (4) onto the substrate (10),
   b) applying pressure and temperature to cure the mixture of the substances of step a) on the substrate (10).
Item 13. Method according to item 12, wherein the pressure in step b) is between 3 and 8 MPa and the temperature is between 150 °C and 250 °C.
Item 14. Method according to item 12 or 13, wherein the wear resistant particles (4) are scattered into the surface layer (1) together with other components of the surface layer (1), especially cellulose fibers (2) and / or at least one binder (3) .
Item 15. Prepreg manufacturable by
   a) forming a surface layer (1) comprising cellulose fibers (2) and at least one binder on a substrate, subsequently
   b) applying elevated pressure and temperatures to the surface layer (1) in prepress station.

## Claims

1. Method for manufacturing a panel, comprising
a) storing cellulose fibers (2), at least one binder (3) and wear resistant particles (4) in different tanks,
b) bringing the cellulose fibers (2), said at least one binder (3) and the wear resistant particles (4) onto a substrate (10),
c) applying pressure and temperature in a pressing station to cure said at least one binder (3) for forming a surface layer (1) on the substrate (10).

2. Method according to claim 1, wherein the pressure in the pressing station in step c) is between 3 and 8 MPa and the temperature is between 150 °C and 250 °C.

3. Method according to claim 1 or 2, wherein the cellulose fibers are at least partly bleached.

4. Method according to any one of the preceding claims, wherein the light fastness according to grey wool scale EN 20 105 of the surface layer (1) is higher than 2.

5. Method according to any one of the preceding claims, wherein the binder (3) comprises melamine resin, acrylate resin and / or polyurethane resin.

6. Method according to any one of the preceding claims, wherein the wear resistant particles (4) are at least one of the following: aluminum oxides, silicon carbides, silicon oxide, micro glass bubbles.

7. Method according to any one of the preceding claims, further comprising wetting a surface of the substrate (10) before applying the cellulose fibers (2), said at least one binder (3) and the wear resistant particles (4) to it.

8. Method according to any one of the preceding claims, further comprising applying heat to the cellulose fibers (2), said at least one binder (3) and the wear resistant particles (4) in a heating station.

9. Method according to claim 8, wherein the heat is applied by an infrared source and / or a microwave source in said heating station.

10. Method according to any one of the preceding claims, wherein the substrate is a board, the board being a particle board, HDF board, gypsum board, WPC (wood plastic composite) or OSB board.

11. Method according to any one of claims 1-9, wherein the substrate (10) comprises a core (11) and a board (12), wherein the surface layer (1) is applied on the core (11).

12. Method according to claim 11, wherein the board is a particle board, HDF board, gypsum board, WPC (wood plastic composite) or OSB board.

13. Method according to claim 11 or 12, wherein the core (11) comprises at least one of the following: wood fibers, cellulose fibers, hemp fibers, cotton fibers, plastic fibers.

14. Method according to any one of claims 10-13, wherein the core (11) comprises a binder, bleached cellulose, unbleached cellulose, bleached ground wood, unbleached ground wood and / or pigments.

15. A panel manufactured according to the method of any one of claims 1-14.

## Patentansprüche

1. Verfahren für die Herstellung eines Paneels, umfassend
a) Aufbewahren von Zellulosefasern (2), wenigstens eines Bindemittels (3) und verschleißfesten Partikeln (4) in unterschiedlichen Behältern,
b) Aufbringen der Zellulosefasern (2), des wenigstens einen Bindemittels (3) und der verschleißfesten Partikel (4) auf ein Substrat (10),
c) Aufbringen von Druck und Temperatur in einer Pressstation, um das wenigstens eine Bindemittel (3) zum Ausbilden einer Oberflächenschicht (1) auf dem Substrat (10) zu härten.

2. Verfahren nach Anspruch 1, bei dem der Druck in der Pressstation bei Schritt c) zwischen 3 und 8 MPa liegt und die Temperatur zwischen 150°C und 250°C liegt.

3. Verfahren nach Anspruch 1 oder 2, bei dem die Zellulosefasern wenigstens teilweise gebleicht werden.

4. Verfahren nach einem der vorhergehenden Ansprüche, bei dem die Lichtechtheit nach der Graumaßstab Skala EN 20 105 der Oberflächenschicht (1) höher als 2 ist.

5. Verfahren nach einem der vorhergehenden Ansprüche, bei dem das Bindemittel (3) Melaminharz, Acrylatharz und/oder Polyurethanharz umfasst.

6. Verfahren nach einem der vorhergehenden Ansprüche, bei dem die verschleißfesten Partikel (4) wenigstens eines der folgenden sind: Aluminiumoxide, Siliziumkarbide, Siliziumoxid, Mikroglasblasen.

7. Verfahren nach einem der vorhergehenden Ansprüche, weiterhin umfassend das Benetzen einer Oberfläche des Substrats (10) vor dem Aufbringen der Zellulosefasern (2), des wenigstens einen Bindemittels (3) und der verschleißfesten Partikel (4) darauf.

8. Verfahren nach einem der vorhergehenden Ansprüche, weiterhin umfassend das Aufbringen von Wärme auf die Zellulosefasern (2), das wenigstens eine Bindemittel (3) und die verschleißfesten Partikel (4) in einer Heizstation.

9. Verfahren nach Anspruch 8, bei dem die Wärme durch eine Infrarotquelle und/oder eine Mikrowellenquelle in der Heizstation angewendet wird.

10. Verfahren nach einem der vorhergehenden Ansprüche, bei dem das Substrat eine Platte ist, wobei die Platte eine Spanplatte, HDF-Platte, Gips-Platte, WPC (Wood Plastic Composite) oder OSB-Platte ist.

11. Verfahren nach einem der Ansprüche 1-9, bei dem das Substrat (10) einen Kern (11) und eine Platte (12) umfasst, wobei die Oberflächenschicht (1) auf den Kern (11) aufgebracht wird.

12. Verfahren nach Anspruch 11, bei dem die Platte eine Spanplatte, HDF-Platte, Gips-Platte, WPC (Wood Plastic Composite) oder OSB-Platte ist.

13. Verfahren nach Anspruch 11 oder 12, bei dem der Kern (11) wenigstens eines der folgenden umfasst: Holzfasern, Zellulosefasern, Hanffasern, Baumwollfasern, Kunststofffasern.

14. Verfahren nach einem der Ansprüche 10-13, bei dem der Kern (11) ein Bindemittel, gebleichte Zellulose, ungebleichte Zellulose, gebleichtes gemahlenes Holz, ungebleichtes gemahlenes Holz und/oder Pigmente umfasst.

15. Paneel, hergestellt nach einem Verfahren der Ansprüche 1 bis 14.

## Revendications

1. Procédé de fabrication d'un panneau, comprenant
a) le stockage de fibres de cellulose (2), d'au moins un liant (3) et de particules résistant à l'usure (4) dans différents récipients,
b) l'application des fibres de cellulose (2), dudit au moins un liant (3) et des particules résistant à l'usure (4) sur un substrat (10),
c) l'application de pression et de température dans une station de compression pour faire durcir ledit au moins un liant (3) pour former une couche de surface (1) sur le substrat (10).

2. Procédé selon la revendication 1, dans lequel la pression dans la station de compression dans l'étape c) est de 3 à 8 MPa et la température est de 150°C à 250°C.

3. Procédé selon la revendication 1 ou 2, dans lequel les fibres de cellulose sont au moins partiellement blanchies.

4. Procédé selon l'une quelconque des revendications précédentes, dans lequel la solidité à la lumière selon l'échelle de laine grise EN 20 105 de la couche de surface (1) est supérieure à 2.

5. Procédé selon l'une quelconque des revendications précédentes, dans lequel le liant (3) comprend une résine de mélamine, une réside d'acrylate et/ou une résine de polyuréthane.

6. Procédé selon l'une quelconque des revendications précédentes, dans lequel les particules résistant à l'usure (4) sont au moins une des suivantes : oxydes d'aluminium, carbures de silicium, oxyde de silicium, microbulles de verre.

7. Procédé selon l'une quelconque des revendications précédentes, comprenant de plus le mouillage d'une surface de substrat (10) avant l'application des fibres de cellulose (2), dudit au moins un liant (3) et des particules résistant à l'usure (4) à celle-ci.

8. Procédé selon l'une quelconque des revendications précédentes, comprenant de plus l'application de chaleur aux fibres de cellulose (2), audit au moins un liant (3) et aux particules résistant à l'usure (4) dans une station de chauffage.

9. Procédé selon la revendication 8, dans lequel la chaleur est appliquée par une source infrarouge et/ou une source de micro-ondes dans ladite station de chauffage.

10. Procédé selon l'une quelconque des revendications précédentes, dans lequel le substrat est une plaque, la plaque étant une plaque agglomérée, une plaque de HDF, une plaque de gypse, une plaque de WPC (composite bois plastique) ou OSB.

11. Procédé selon l'une quelconque des revendications 1-9, dans lequel le substrat (10) comprend un noyau (11) et une plaque (12), dans lequel la couche de surface (1) est appliquée sur le noyau (11).

12. Procédé selon la revendication 11, dans lequel la plaque est une plaque agglomérée, une plaque de HDF, une plaque de gypse, une plaque de WPC (composite bois plastique) ou OSB.

13. Procédé selon la revendication 11 ou 12, dans lequel le noyau (11) comprend au moins une des suivantes : fibres de bois, fibres de cellulose, fibres de chanvre, fibres de coton, fibres plastiques.

14. Procédé selon l'une quelconque des revendications 10-13, dans lequel le noyau (11) comprend un liant, de la cellulose blanchie, de la cellulose non-blanchie, du bois broyé blanchi, du bois broyé non-blanchi et/ou des pigments.

15. Panneau fabriqué selon le procédé selon l'une quelconque des revendications 1-14.
